# EUROPEAN PATENT APPLICATION

(11) **EP 3 739 507 A1**
(43) Date of publication of application: **18.11.2020**
(21) Application number: 19382381.2
(22) Date of filing: 14.05.2019
(51) Int. Cl.: G06K 9/00, G06K 9/62, G06K 9/46

(54) **METHOD AND SYSTEM FOR OBTAINING INFORMATION ABOUT AN OBJECT BASED ON A PHOTOGRAPH THEREOF**

(71) Applicant: Banco Bilbao Vizcaya Argentaria, S.A., 28050 Madrid (ES)
(72) Inventor: FERNÁNDEZ FREIRE, José Ángel, E-28050 Madrid (ES); CRESPO RODRÍGUEZ, Manuel, E-28050 Madrid (ES); SALAZAR LÓPEZ, Carlos, E-28050 Madrid (ES)
(74) Representative: ABG Intellectual Property Law, S.L.

(57) **Abstract**

The present invention relates to a method and system for obtaining information about an object based on a photograph thereof. In particular, the information is financial information, for example, obtaining the retail price of the object, calculating bank loans for acquiring said object, or estimating the insurance thereof.

## Description

### Object of the Invention

The present invention relates to a method and system for obtaining information about an object based on a photograph thereof. In particular, the information is financial information, for example, obtaining the retail price of the object, calculating bank loans for acquiring said object, or estimating the insurance thereof.

### Background of the Invention

Financial information associated with a certain object, for example a vehicle, a computer, a mobile telephone, or a household appliance, requires identifying various attributes characterizing said object. These attributes include, among others, the brand, model, version, finishing, and additional features of the object, for example.

The larger the number of attributes, the more precise the obtained financial information will be. For example, if only the brand and model of an object are known, the range of retail prices will vary greatly, whereas if this range is narrowed down to the desired version, finishing, and additional features, said price will be much closer to the actual value.

Identifying the attributes characterizing an object is not always a simple task because the person who needs to know the financial information about the object may not be familiar with these attributes. Furthermore, the person may not have decide whether or not to incorporate in the object attributes considered to be optional, for example, if the object is a car, adding GPS navigation, rear camera, special upholstery, or heated seats.

The financial information associated with an object can be obtained today by means of financial simulators which receive these attributes as input. In that sense, to obtain precise, and therefore useful financial information, one must be familiarized with the large number of attributes of the object and enter same into the financial simulators through a series of forms. Due to the process being tedious and complex, the method for obtaining the financial information is often interrupted and even abandoned.

The following invention proposes a solution to the preceding problems by means of a method and system for obtaining financial information about an object based on a photograph thereof, in a quasi-immediate manner, without having to identify, familiarize oneself with, and provide the attributes characterizing said object.

### Description of the Invention

The present invention proposes a solution to the preceding problems by means of a computer-implemented method for assigning quantitative characteristics to an object based on a photograph thereof according to claim 1, a system for assigning quantitative characteristics according to claim 17, a computer program product according to claim 18, and a computer-readable medium according to claim 19. Preferred embodiments of the invention are defined in the dependent claims.

A first inventive aspect provides *a computer-implemented method for a system to assign quantitative characteristics to an object based on at least one photograph that a portable device takes of the object, said portable device being configured for taking photographs and storing them in an internal memory, wherein the system comprises:*
- *an identification module configured for receiving the at least one photograph that the portable device takes, identifying a typology of the photographed object, and providing said identified typology together with a level of accuracy,*
- *an assessment module configured for linking a typology of an object with its assessment, and*
- *a characterization module which assigns quantitative characteristics to an object depending on its assessment,*
*wherein the method comprises the steps of:*
*a) the identification module receiving at least one photograph of an object stored in an internal memory of a portable device,*
*b) the identification module identifying at least one typology of the photographed object furthermore providing its level of accuracy, such that:*
   - *in the event that said level of accuracy is lower than a given threshold, the at least one photograph is rejected, and*
   - *in the event that said level of accuracy is greater than the given threshold, the at least one photograph is assigned the "valid" state and the following step is carried out,*
*c) the assessment module receiving the at least one typology of the photographed object from the identification module,*
*d) the assessment module linking the at least one typology of the object with its assessment,*
e) *the characterization module receiving said assessment linked with the at least one typology by the assessment module, and the characterization module assigning quantitative characteristics to the object depending on said assessment, and*
*f) sending said assessment and quantitative characteristics of the object to the portable device.*

The method of the first inventive aspect is carried out through a system comprising a set of modules. Throughout this document, "module" will be understood to be a set of elements configured for performing the task assigned to said module, for example, an identification module comprises means for performing identification and an assessment module comprises means performing assessment. Furthermore, the modules are configured for establishing communication with another module or other modules of the system.

First, the identification module receives one or more photographs of an object. Said photographs are stored in the internal memory of a portable device accessible by said identification module. Portable device must be understood to be a device which a user can readily transport and comprises a photography camera and an internal memory. In a preferred embodiment, the portable device comprises a processor or microprocessor with processing capacities, for example, a mobile telephone or a tablet.

Once the identification module has received the photograph or photographs of the object, it proceeds to identify one or more typologies of said object. Throughout the document, typology of the object must be understood to be an attribute characterizing said object, for example, its brand, model, or specific finishing.

This typology identification is performed automatically, where a certain degree of error may exist in the identification of each typology. Depending on the errors in typology identification, the identification module provides a level of accuracy, being understood as a likelihood of having correctly recognized the typologies of the photographed object.

According to the level of accuracy, the identification module rejects or accepts the photograph or photographs. The criterion for rejecting photographs is to compare the level of accuracy with a predefined threshold such that, if the level of accuracy is lower than said threshold, the photograph or photographs are rejected and the method ends. In contrast, a "valid" state is assigned to the photograph or photographs and the method continues. In a particular embodiment, assigning "valid" state to a photograph must be understood to mean that typologies of a specific object could be correctly identified from said photographs.

In a preferred embodiment, the level of accuracy is provided in percentages. 0% is indicative of the typologies of the object not having been correctly identified in all likelihood, and 100%, which must be understood to be a level of complete accuracy, is indicative of the typologies of the object having been identified. In an alternative embodiment, the level of accuracy is provided as a value between 0 and 1, with 0 being the value indicating that the typologies have not been identified and 1 the value indicating the level of complete accuracy.

In a preferred embodiment, the threshold establishing when a photograph must be rejected is 85% or 0.85.

In an alternative embodiment, the identification module provides a level of error and not the level of accuracy, with both values being complementary; for example, if the levels are provided in percentages, the level of error will be 100% minus the level of accuracy in percentage.

When the identification module provides a level of accuracy exceeding the predefined threshold, it sends the typology or typologies of the object to the assessment module. This assessment module allows obtaining the assessment of the photographed object which is understood as the assessment of the retail price of said object calculated depending on the identified typologies.

The assessment module then sends the assessment to the characterization module. Said characterization module is in charge of assigning quantitative characteristics to the photographed object based on its assessment. Finally, these quantitative characteristics are sent to the portable device which took and stored the photograph or photographs of the object.

Quantitative characteristics must be understood to be the calculation of any type of bank loan which will allow the user to acquire the photographed object and estimate the cost to insure said object. Additionally, the assessment itself, i.e., the retail price, can also be considered a financial characteristic.

In a particular example, the quantitative characteristics of the object provide information about the yearly and/or monthly costs the user will have to pay to acquire and insure the object. In another particular example, several loan and insurance options are offered depending on slight variations in the typologies of the object; for example, if new typologies not identified in previous steps of the method are added, or if certain typologies that were identified but are dispensable, such as additional car features, are eliminated. In another particular example, estimations of third-party insurance and all-risk insurance are offered. In another particular example, an estimation of the loan, pre-approved or not, for full or partial payment of the car, are offered.

Advantageously, complete financial information about the photographed object is obtained in a quick and simple manner by means of a completely transparent method, receiving the information in an almost quasi-immediate manner in the portable device. In an even more advantageous manner, additional financial information which provides different scenarios to be chosen can be received with the method of the invention.

Said information does not require being familiarized with the attributes characterizing the object to be acquired. Simply taking a photograph of the desired object on the street, in a shop, in a home, in establishments where such objects are sold, etc., can allow knowing the retail price thereof, having an estimation of a bank loan for acquiring same, and knowing the costs associated with the insurance of said object.

In a particular embodiment, *the system additionally comprises a cleaning module configured for interacting with photographs stored in the internal memory of the portable device and for processing said photographs, and the method additionally comprises a prior step of the cleaning module processing the at least one photograph of an object that the portable device takes, the step of processing comprising: the cleaning of at least one unwanted element, or the enhancement of edges, or lighting correction, or a combination of two or more of the above.*

Additionally, the system in charge of carrying out the method has a cleaning module configured for accessing the photograph or photographs stored in the internal memory of the portable device and for processing them before the delivery thereof to the identification module. The advantage of this processing is to improve image quality so that typology identification by the identification module is simpler, quicker, and more precise.

This processing comprises, among others, the following techniques (or a combination of two or more of said techniques):
- cleaning of unwanted elements to improve visualization of the photographed object. For example, elimination of shadows or secondary objects in the photograph.
- enhancement of edges to improve the definition or sharpness of the photographed object.
- lighting correction of the photographed scene.

In a particular embodiment, *the system further comprises a temporary storage server, with a database, configured for anonymizing and storing in the database in a temporary manner the at least one photograph that the portable device takes and the identification module will receive, and the method additionally comprises the following steps performed by the temporary storage server:*
- *receiving at least one photograph of an object stored in an internal memory of the portable device,*
- *anonymizing the at least one photograph of an object,*
- *storing in the database the at least one anonymized photograph of an object,*
- *sending the at least one anonymized photograph to the identification module.*

The system in charge of carrying out the method further comprises a temporary storage server with a database. Said server receives the photograph or photographs either directly from the internal memory of the portable device or after their processing by the cleaning module. The server then anonymizes the photographs, stores them temporarily in its database, and sends them to the identification module. Anonymizing or tokenizing a photograph are equivalent terms and must be understood to be an irreversible process in which any reference to the authorship of the photograph is completely eliminated, i.e., the data of the entity or person who took said photograph is eliminated. Advantageously, anonymization of the photographs protects the identity of the one seeking to obtain the financial information, preventing the leak of their personal data, and therefore increasing method security.

In a particular embodiment, *the method additionally comprises a step of the temporary storage server selecting the photograph or photographs complying with a pre-established quality requirement, preferably photographs taken under conditions with good lighting, up to a pre-established maximum number of photographs, and wherein the steps of anonymizing, storing, and sending performed by the temporary storage server are carried out on the selected photographs.*

Advantageously, when a photograph received by the temporary storage server does not satisfy a minimum quality requirement, the temporary storage server will not waste resources on anonymizing and storing same. In an even more advantageous manner, the identification module is prevented from receiving poor quality photographs that may lead to an erroneous typology identification of the photographed object, i.e., wasting resources on identifying typologies that will lead to a level of accuracy below the pre-established threshold is prevented.

Furthermore, the number of images to be anonymized and stored by the temporary storage server must be limited, specifically a number that is sufficient to enable carrying out the subsequent step of typology identification. Advantageously, this limitation allows not wasting resources on anonymizing and storing photographs that will not be necessary in the subsequent step of typology identification.

In a particular embodiment, *the step of identifying at least one typology of the photographed object is performed by means of a machine learning algorithm, preferably convolutional neural networks.*

Throughout this document, machine learning algorithm will be understood to be any algorithm, software, or computer program which allows computers to learn a specific behavior based on information supplied as examples. In that sense, said computers can even act and make decisions by themselves without having to explicitly program them for such purpose.

The use of algorithms of this type in the context of the invention has the advantage of a quick and precise identification of the typologies of the objects, which allows the method to be carried out in a quasi-immediate manner. For the identification module to perform its function, a series of exemplary photographs must be supplied to the machine learning algorithm. These photographs must contain known objects with typologies similar to those of the objects about which financial information is to be obtained. The more input examples used, the more effective typology identification will become, and hence the quicker and more precise the method will be.

The preferred use of convolutional neural networks allows a more effective typology identification as they are an optimized technique for photograph classification. In that sense, by using algorithms of this type, the need to pre-process the photographs of the object about which financial information is to be obtained is minimized, which entails an increase in method effectiveness and speed.

In a particular embodiment, *the identification module additionally comprises a training sub-module of the machine learning algorithm configured for storing at least one set of training photographs, such that each set of training photographs shows an object that can be identified by the identification module, and said training sub-module being additionally configured for training the machine learning algorithm by assigning at least one typology to each photograph of the at least one set of training photographs; wherein the method additionally comprises the following steps performed by the training sub-module of the machine learning algorithm:*
- *storing at least one set of training photographs,*
- *training the machine learning algorithm by assigning at least*

*one typology to each of the photographs of the at least one set of training photographs.*

This embodiment describes a technique for training the machine learning algorithm with which typology identification of the photographed object is carried out.

Throughout the document, training must be understood to be a step of the machine learning algorithm during which the computer (or an equivalent device) learns to make decisions by itself. In the context of the invention, training is a step or a set of key steps of the machine learning algorithm whereby the identification module learns to identify the typologies of an object based on one or more photographs of said object.

First, the training of this embodiment must be understood to be a step prior to the method of the first inventive aspect. The identification module comprises a training sub-module which receives and stores a set of training photographs, such photographs being understood to be photographs containing the object or objects about which financial information can be obtained. The training sub-module is configured for assigning at least one typology to each training photograph. This step must be repeated every so often to broaden the set of training photographs and re-train the machine learning algorithm as new objects are placed on the market.

In a preferred embodiment, the process of assigning typologies to the training photographs is a labeling step through which a different label is assigned, per identified typology, to each training photograph. This process can be performed manually or automatically. For example, if a training photograph contains a car, some of the assigned labels will be its brand, model, color, and upholstery. In another example, if a training photograph contains a mobile telephone, some of the assigned labels will be its brand, model, color, and accessories.

In another preferred embodiment, the training photographs are acquired with good lighting. Even more preferably, said photographs come from the commercial catalogs of the object under identification.

Once typologies have been assigned to the training photographs, the machine learning algorithm of the identification module acquires this knowledge and learns how to carry out typology identification. Advantageously, typology identifications of objects other than those desired, false positives, and other values not required in the method, are avoided.

In a particular embodiment, *the training sub-module of the machine learning algorithm is additionally configured for identifying a plurality of options for one and the same typology and for plurality of options to the portable device; wherein the step of training the machine learning algorithm of the method additionally comprises the following steps:*
- *the training sub-module identifying a plurality of options for at least one typology of the object of a photograph received by the identification module,*
- *the portable device receiving the plurality of options for its selection,*
- *the training sub-module receiving the selected option of typology,*
- *the training sub-module training the machine learning algorithm by assigning to the new training photograph the option of the at least one selected typology.*

The training can furthermore be completed at the expense of performing a selection of possible typologies identified in the portable device. In this embodiment, the training sub-module is furthermore configured for identifying more than one option for one and the same typology of the object; e.g., two or more probable brands of one and the same object. These options are sent by said sub-module to the portable device so that the option which fits the object about which financial information is to be obtained is selected. Once the selection is carried out, it is sent back to the training sub-module to use the photograph by way of a "training photograph"; i.e., the machine learning algorithm is trained by assigning to the photograph the option of typology selected in the portable device.

This additional training step can take place before, during, or after the end of the method execution. In that sense, it can take place in a simultaneous manner, in a sequential manner, or in an independent manner with respect to the training and subsequent re-training steps.

Advantageously, the set of training photographs is augmented with photographs in which the typologies have been correctly identified, which allows improving the precision of the machine learning algorithm.

In a particular embodiment, *the photograph in which the training sub-module identifies a plurality of options is a photograph to be rejected in step (b) of the method, and wherein the method additionally comprises:*
- *the identification module receiving the option or options of typologies selected by the portable device,*
- *the identification module providing a level of complete accuracy for the photograph to be rejected and assigning to said photograph the "valid" state;*
- *continuing with step (c) of the method.*

In this particular embodiment, the photographs used for completing the training are those which the identification module was going to reject for having a level of accuracy below the predefined threshold. In that sense, instead of rejecting said photographs, the training sub-module identifies the plurality of options of typologies in said photographs and sends them to the portable device for its selection.

If said selection occurs, the identification module also receives the selected typology or typologies, and since it is very likely that the typologies are well identified, the identification module assigns to the photograph to be rejected the "valid" state and provides a level of accuracy greater than the threshold, preferably a level of complete accuracy. This is followed by the implementation of step (c) of the method.

If said selection does not occur, the identification module does not receive the typology or typologies, the photograph is rejected, and the method ends.

This embodiment entails two advantages: on one hand, photographs are not rejected when the typology identification does not exhibit a level of accuracy above the threshold, and on the other hand, the actual photographs which were to be rejected are used to provide knowledge to the machine learning algorithm, and they therefore contribute to improving precision.

The training of this embodiment requires that the method is currently being implemented because it requires the participation of the photographs to be rejected in step (b) of said method.

In a particular embodiment, *the identification module in turn comprises a feedback sub-module of the machine learning algorithm configured for storing those photographs which have been assigned the "valid" state, with the level of accuracy thereof furthermore preferably being complete, and for feeding back the machine learning algorithm; wherein the method additionally comprises the following steps performed by the feedback sub-module of the machine learning algorithm:*
- *storing the photograph or photographs which have been assigned the "valid" state, with the level of accuracy thereof furthermore preferably being complete, and*
- *feeding back the machine learning algorithm of the identification module with said photograph or photographs to help obtain, in subsequent implementations of the method, a higher level of accuracy when identifying the at least one typology of the same photographed object or of another photographed object with the same typology*/*typologies.*

A feedback method is another step for training a machine learning algorithm which requires that the method is currently being implemented or has already been implemented as it requires data used during said method. In particular, in the context of the invention the photographs to which the "valid" state has been assigned are required.

The steps of the method of this embodiment seek to improve the precision of the machine learning algorithm, i.e., they seek to obtain an increasingly higher level of accuracy provided by the identification module in subsequent implementations of the method.

In that sense, the identification module comprises a feedback sub-module. During the execution of the method, when a photograph is assigned the "valid" state, it is stored in said feedback sub-module. Preferably, the level of accuracy associated with said photograph must be complete, i.e., an absolute certainty of the typologies being correctly identified must has been reached; e.g., 100% accuracy if the level is provided in percentages or 1 if it is provided in normalized values.

The feedback sub-module then feeds back the machine learning algorithm with said photographs. This step advantageously helps to obtain a higher level of accuracy of the method in subsequent implementations thereof. This feedback can be performed concurrently with respect to the method or after the execution of the method has ended.

In a preferred embodiment, the steps of training, subsequent re-training, training by selection, and the step of feedback are performed together, each at the corresponding time instant. Even more preferably, each of them contributes to the overall training of the machine learning algorithm with a different weight. In an alternative embodiment, only one of the mentioned steps is carried out. In another alternative embodiment, combinations of at least two of the preceding techniques are carried out.

In a particular embodiment, *the temporary storage server is furthermore configured for identifying patterns in the at least one photograph it receives, and wherein the method further comprises the steps of:*
- *the temporary storage server identifying patterns in the at least one photograph it receives, preferably alphanumeric characters, and*
- *the identification module receiving said patterns, such that the machine learning algorithm of the identification module uses them as additional information in the identification of the at least one typology of the photographed object.*

In this embodiment the temporary storage server is configured for identifying patterns in the photographs. Throughout this document, patterns will be understood to be certain points, sets of points or elements of the image which can be repeated and characterize the image. As a result of the identification of patterns, one or more of the typologies of the photographed object can be more readily identified. In that sense, advantageously, when the identification module receives the patterns together with the photograph or photographs, the typology identification process becomes faster.

In a preferred embodiment, the patterns allow recognizing alphanumeric characters in the photographs which help to identify the "brand" and "model" typologies of the object. Advantageously, the identification of the rest of the typologies is much quicker and more precise because it must be limited to the set of typologies which are consistent with the previously identified "brand" and "model". For example, the additional features of a car are limited to the specific brand and model, or the accessories of a mobile telephone are also limited to the brand and model thereof

In a particular embodiment, *pattern identification by the temporary storage server is performed by means of computer vision techniques, preferably by means of a variant of the SURF (Speeded-Up Robust Features) algorithm.*

In the context of the invention, techniques optimized for pattern search, particularly computer vision techniques, and preferably the known SURF algorithm adapted to the requirements of the invention, are used. Advantageously, the use of optimized algorithms assures that pattern recognition in the photographs has a high probability of success. Therefore, pattern recognition allows assuring that the identification of the "brand" and "model" of the object has been performed correctly and the typology identification process becomes faster.

In a particular embodiment, *the cleaning module is additionally configured for interacting with photographs stored in the internal memory of the portable device so as to recognize at least one distinctive element of the object from a photograph of said object; wherein the system further comprises a correspondence module configured for identifying the typology of the object based on the distinctive element, and wherein the method further comprises:*
- *the cleaning module receiving at least one photograph of an object stored in an internal memory of the portable device,*
- *the cleaning module recognizing at least one distinctive element of the object from the at least one photograph of said object,*
- *the correspondence module receiving said at least one distinctive element,*
- *the correspondence module identifying the at least one typology of the object based on the distinctive element, and*
- *the correspondence module sending said at least one typology of the identified object to the assessment module.*

In this embodiment, the typologies of the photographed object are identified in an alternative manner with respect to that described in the preceding embodiments. Advantageously, if the photograph or photographs of an object have been rejected in step (b) of the method, there is an additional way of identifying the typologies of the object, and therefore obtain financial information about said object.

The cleaning module is additionally configured so as to recognize distinctive elements in the photographs stored in the portable device. Distinctive element must be understood to be an element characterizing the object completely and unequivocally, i.e., an element which is inherently associated with all the typologies of the object. In a particular example, the distinctive element is a license plate of a car or another type of vehicle; in another particular example, the distinctive element is a barcode.

In a particular example, the distinctive element is obtained by means of photograph processing techniques.

Said distinctive element is sent by the cleaning module to a correspondence module which identifies the typology or typologies of the object. For example, if the distinctive element is a license plate, the correspondence module can obtain, among others, typologies such as brand, model, version, finishing, and additional features.

If a single result is not obtained during the identification of the distinctive element, the cleaning module sends the plurality of results to the portable device for its selection. In that sense, which of said options better fits the object about which financial information is to be obtained is chosen from the portable device. If selection does not take place, the method ends, and if selection does indeed take place, said selection is again sent to the cleaning module and the execution of the method continues from the point at which correct identification of the distinctive element occurs.

Finally, the correspondence module sends the at least one identified typology to the assessment module. At this point, the method continues in a manner similar to how it would continue if the typologies were identified by means of the identification module.

In a particular embodiment, *the cleaning module is furthermore configured for segmenting the distinctive element of the object and the temporary storage server anonymizes and stores in a separate manner the at least one photograph of the object and its segmented distinctive element, if any.*

The cleaning module is configured for segmenting the distinctive element of the object from the photograph. Advantageously, the process for identifying said distinctive element becomes faster because the processing is performed on a group of pixels of the photograph and not on the entire photograph.

Furthermore, the temporary storage server also participates in the alternative way of identifying the typologies of the photographed object. Said temporary server receives the photograph or photographs and the segmented distinctive elements thereof for temporary storage. The server is in charge of anonymizing each photograph and distinctive element in an advantageous manner so as to not leave any record concerning authorship of the photograph, and to thereby increase method security.

In a particular embodiment, *the system additionally comprises a text recognition module characterized in that it converts the distinctive element to text format, wherein the step of the method of the correspondence module receiving the distinctive element, is preceded by the following additional steps:*
- *the text recognition module receiving the distinctive element of the object,*
- *the text recognition module converting the distinctive element to text format.*

The distinctive element identified by the cleaning module in this embodiment is converted to text format by a text recognition module. Advantageously, the correspondence module receives said text and the typology identification process becomes faster. For example, if the distinctive element is a license plate, the correspondence module receives a set of numbers and letters representing in an unequivocal manner a specific vehicle and the typologies thereof (brand, model, finishing, additional features, etc.) can be quickly obtained.

In a particular embodiment, *taking at least one photograph of an object by the portable device comprises an augmented reality algorithm assisting said portable device, said augmented reality algorithm comprising at least one of the following types of help:*
*help for centering the object to be photographed, or*
*help for capturing the best lighting, or*
*help for moving the camera of the portable device, or*
*help for clearly capturing the distinctive element of the object, or*
*a combination of at least two of the above.*

In this embodiment, assistance is provided while taking photographs of the object about which financial information is to be obtained. Said help is provided by means of augmented reality algorithms which indicate, among others, the way to center the object, capture the best lighting, or take photographs of the distinctive element of the object, if any. Advantageously, the quality of the images which the portable device takes has an acceptable level for subsequent typology identification, which allows greater precision in said identification.

In a preferred embodiment, the portable device acquires the images in the form of video from which the frames of interest are extracted. In this embodiment, the augmented reality algorithm indicates the way to move the camera of the portable device so that both the object and its distinctive element are seen from different perspectives. Advantageously, there are many photographs of the object taken from different angles, which allows capturing details of the object that would otherwise go unnoticed, thereby favoring typology identification of the object.

A second inventive aspect provides *a system for assigning quantitative characteristics to an object, comprising means for carrying out the steps of the method of the first inventive aspect.*

A third inventive aspect provides *a computer program comprising instructions which, when the program is run by a computer, causes the computer to carry out the steps of the method according to the first inventive aspect.*

A fourth inventive aspect provides *a computer-readable medium comprising instructions which, when run by a computer, causes the computer to carry out the steps of the method according to the first inventive aspect.*

All the features and/or method steps described in this specification (including the claims, description, and drawings) can be combined in any combination, with the exception of the combinations of such mutually exclusive features.

### Description of the Drawings

These and other features and advantages of the invention will be more clearly shown based on the following detailed description of a preferred embodiment given only by way of illustrative, non-limiting example in reference to the attached drawings.
Figures 1a-1b show two embodiments of the method for assigning quantitative characteristics to a photographed object.
Figures 2a-2c illustrate three embodiments of the method for assigning quantitative characteristics to a photographed object using machine learning algorithms.
Figure 3a-3b show two embodiments of the method with different alternatives for the typology identification process of the objects.

### Detailed Description of the Invention

### Method

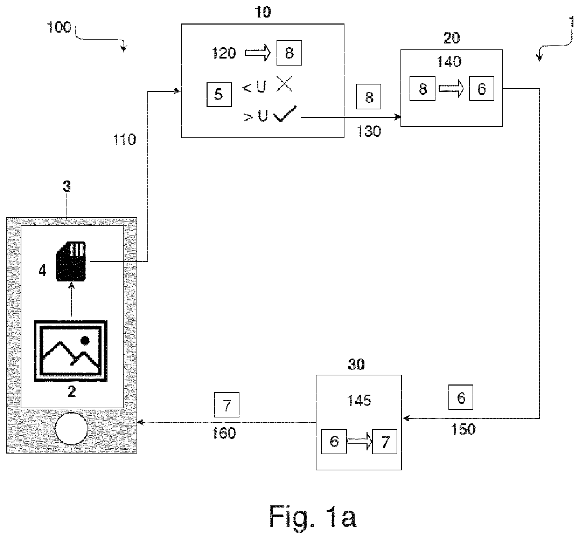

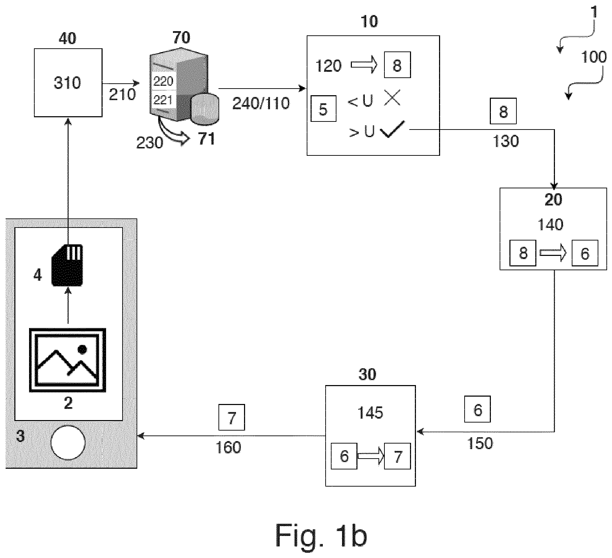

Figures 1a and 1b show two embodiments of the method (100) for assigning quantitative characteristics to an object.

Three large modules can be distinguished in Figure 1a,: the identification module (10), the assessment module (20), and the characterization module (30). Furthermore, this drawing shows as the portable device (3) a smartphone configured for taking photographs (2) of objects and storing them in its internal memory (4). In this particular example, the photographed object is a car or vehicle.

First, the identification module (10) receives (110) a photograph (2) of a car stored in the internal memory (4) of the portable device (3). Once received, the identification module (10) identifies (120) the different typologies (8) of the photographed car, providing a level of accuracy (5). In this particular example, the brand, model, version, finishing, and additional features of the car are identified and a level of accuracy of 88% is provided.

Next, the identification module checks if the level of accuracy is above a threshold (U). In this example, the threshold (U) is established at 85% so, since the photograph has a level of accuracy (5) above said threshold (U), the process continues. If the level of accuracy (5) had been less than the threshold (U), said photograph would have been rejected.

The identification module (10) sends the identified typologies (8) of the car to the assessment module (20) which is in charge of linking (140) said typologies (8) of the car with its assessment (6)- retail price -in accordance with all the identified typologies (8).

As a result of this assessment (6) which the characterization module (30) will then receive (150), said characterization module can assign (145) quantitative characteristics (7) to the car. The quantitative characteristics (7) assigned in this example are the loan which a banking entity may approve to acquire the car and the cost of the all-risk insurance thereof.

Finally, the characterization module (30) sends (160) the quantitative characteristics (7), and optionally the assessment (6) of the car to the portable device (3).

In another particular example, the portable device (3) can receive different retail prices as well as different quantitative characteristics (7) depending on slight modifications in the identified typologies (8) of the car. For example, if "red" is identified in the photograph (2) as the color of the car, the associated cost will be "cost of a red car". However, with the method (100) the portable device (3) can be provided with other costs such as "cost of a blue car", "cost of a black car", "cost of a white car" associated with other options of the "color" typology. Accordingly, both the car loan and the insurance will also experience variations that will be sent to the portable device (3).

Figure 1b shows another embodiment of the method (100) in which two new elements are shown: the cleaning module (40) and the temporary storage server (70).

The cleaning module (40) is configured for interacting with the photographs (2) stored in the internal memory (4) of the portable device (3) and for processing (310) said photographs (2). The purpose of this processing is to improve the quality of the photographs (2) to facilitate the subsequent identification of typologies (8). In this example, the processing techniques used by the cleaning module (40) include the cleaning of unwanted elements (shadows and secondary objects surrounding the target car), the enhancement of edges to improve the sharpness of the car, and the correction of the lighting of the scene.

The processed photographs (2) are received (210) by the temporary storage server (70). First, the temporary storage server (70) selects (221) up to 24 (N) photographs (2) that meet a pre-established quality requirement; in this example, photographs (2) taken under conditions with good lighting. The server (70) then anonymizes (220) the selected photographs (2) to eliminate any personal data relating to the author of the photographs (2). These anonymized photographs (2) are temporarily stored (230) by the server (70) in its database (71) until they are sent (240) to the identification module (10).

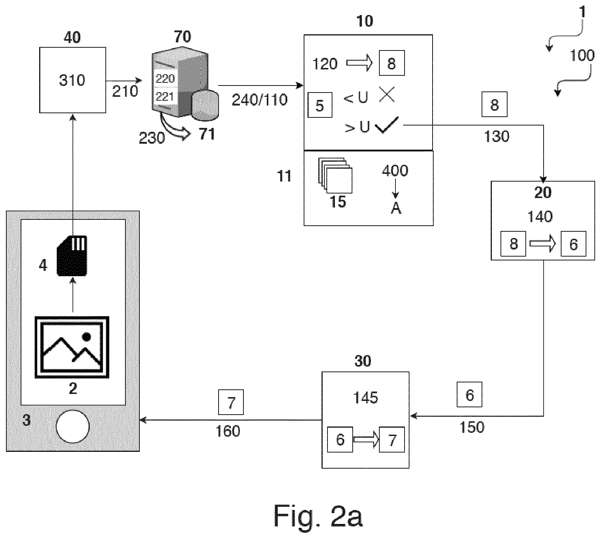

Figures 2a-2c show three embodiments of the method (100) in which the identification module (10) identifies (120) the typologies (8) of the object, in this case a car, by means of a machine learning algorithm (A), particularly a convolutional neural network.

In Figure 2a, the identification module comprises a training sub-module (11) of the machine learning algorithm (A). Said sub-module (11) is configured for storing a set of training photographs (15), such that the training photographs (15) show cars with different typologies (8). Furthermore, the sub-module (11) is also configured for training (400) the machine learning algorithm (A) by assigning at least one typology (8) to each photograph of the at least one set of training photographs (15). In this example, said assignment is performed by means of tagging. In that sense, when a training photograph (15) shows a car of brand A, model B, and color C, the training sub-module assigns to said training photograph (15) tags A, B, and C.

This training step (400) is performed before any implementation of the steps of the method (100) because if the prior training (400) of the machine learning algorithm (A) is not performed, the identification module (10) will not learn how to identify the typologies (8) of the objects, and therefore assigning quantitative characteristics (6) thereto will not be possible.

However, it is important to re-train (400) the machine learning algorithm (A) every so often by including in the set of training photographs (15) photographs showing the new objects that are being introduced on the market. In this particular example, not only it is necessary to contemplate in the training photographs (15) the new car brands and models, but there is also a need to complete the set of training photographs (15) as new car design or technological advances are incorporated.

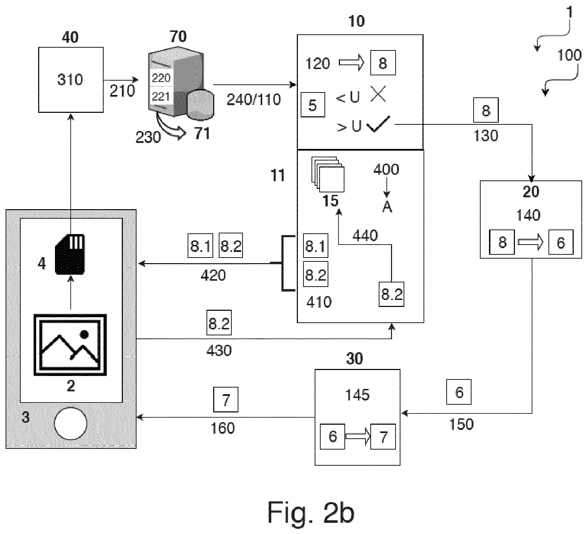

The training sub-module (11) is additionally configured for identifying a plurality of options for one and the same typology (8). This embodiment is shown in Figure 2b, where the training sub-module (11) has identified (410) two options (8.1, 8.2) for the "model" typology (8) of the car. The portable device (3) then receives (420) these two options (8.1, 8.2) and selects the second option (8.2). The training sub-module (11) receives (430) the selected option (8.2) of typology (8), stores (440) the photograph as part of the set of training photographs (15), and trains (400) the machine learning algorithm (A) by assigning to the new training photograph (15) the selected option (8.2) of typology (8).

To utilize the already available resources, the photograph in which the training sub-module (11) identifies the plurality of options (8.1, 8.2) is preferably one of the photographs (2) to be rejected by the identification module (10); i.e., photographs (2) with a level of accuracy (5) less than the threshold (U). In such case, the identification module (10) receives from the training sub-module (11) the option (8.2) of typology (8) selected from the portable device (3) and the identification module (10), trusting that the selection of the option (8.2) of typology is correct, provides a level of complete accuracy (5) and assigns the "valid" state to the photograph. Finally, this is followed by step (c) of the method. Therefore, the photograph is not rejected while at the same time improving the training of the machine learning algorithm (A).

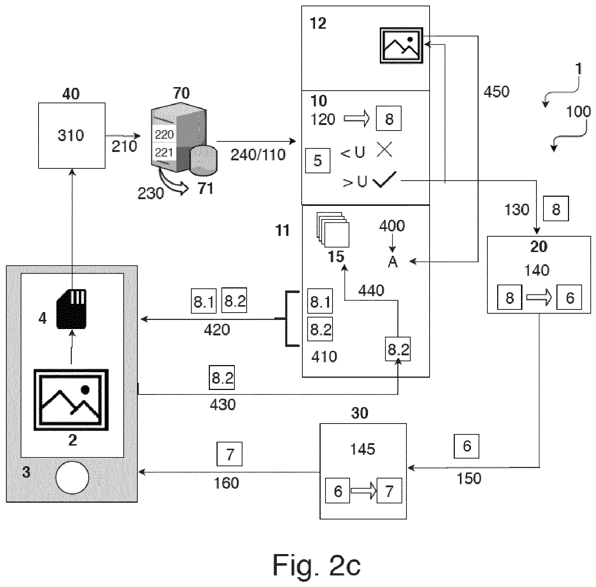

Figure 2c shows a third embodiment in which the machine learning algorithm (A) not only receives training but also has improved precision as a result of a feedback step. Said feedback step is carried out by the feedback sub-module (12) of the machine learning algorithm (A) which is configured for storing those photographs (2) which have been assigned the "valid" state, with the level of accuracy (5) thereof furthermore preferably being complete, and for feeding back (450) the machine learning algorithm (A).

Feeding back (450) the machine learning algorithm (A) of the identification module (10) with said photographs (2) allows helping to obtain a higher level of accuracy (5) when identifying typologies (8) in subsequent implementations of the method (100).

Additionally, the precision of the machine learning algorithm (A) can be improved as a result of the collaboration of the temporary storage server (70). This temporary storage server (70) is configured for identifying patterns in the photographs (2) it receives, preferably alphanumeric characters. The identification module (10) then receives said patterns such that the machine learning algorithm (A) uses them as additional information in the identification (120) of the typology (8) of the photographed object. In the examples of the invention, pattern recognition is performed by means of computer vision techniques, preferably by means of a variant of the SURF (Speeded-Up Robust Features) algorithm.

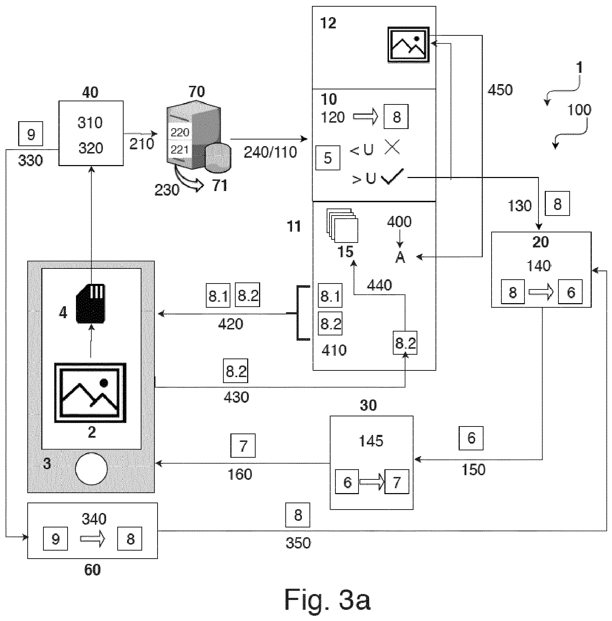

Figures 3a-3b show two embodiments of the method (100) which are alternatives to the identification (120) of typologies (8) of the preceding embodiments.

Figure 3a proposes an alternative to the identification (120) of typologies (8) carried out by the identification module (10). To that end, the cleaning module (40) additionally interacts with the photographs (2) stored in the internal memory (4) of the portable device (3) so as to recognize (320) at least one distinctive element (9) of the object. In this particular example, it recognizes (320) the license plate of the photographed car.

This drawing shows an additional module, the correspondence module (60), which is configured for identifying (340) the typology (8) of the objects based on their distinctive elements (9). In that sense, the correspondence module (60) receives (330) the license plate, identifies (340) the typologies (8) of the car based on its license plate, and sends (350) said typologies (8) to the assessment module (20). At this point, the method (100) continues like in the embodiments described above.

The cleaning module (40) can additionally provide the segmented distinctive element (9) of the photograph (2) to improve subsequent identification (340).

In another particular example, the temporary storage server (70) anonymizes (220) and stores (230) in a separate manner the photograph (2) of the car and its segmented license plate (9), if any.

In another particular example, the cleaning module (40) identifies as possible distinctive elements (9) three different possible license plates; for example, due to low lighting in the scene of the photographs. To prevent having to again acquire photographs of the car, the cleaning module (40) sends the three possible license plates to the portable device (3) for selecting the one corresponding with the photographed car. If none of said license plates is correct, the method ends.

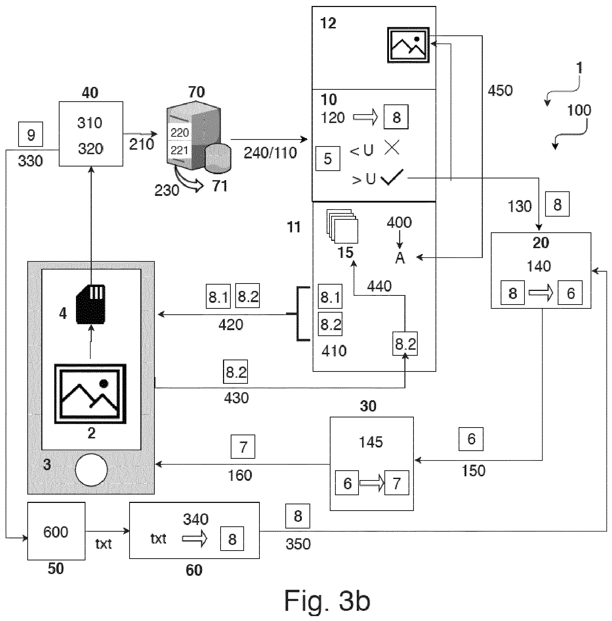

In Figure 3b, the system (1) additionally comprises a text recognition module (50) which receives the distinctive element (9), segmented or not segmented by the cleaning module (40), and converts it (600) to text format. In this particular example, it converts the license plate of the car to a set of letters and numbers to facilitate the subsequent identification (340) of the typologies (8) of the car.

These alternative ways, which require identifying a distinctive element (9) of the objects, are not always available. It will depend precisely on whether or not the objects have said distinctive elements (9). In the examples of the drawings, the alternative ways of identifying (120) typologies (8) cannot be performed if the photographed car is not registered. In that sense, the only way in which quantitative characteristics (6) can be assigned to non-registered cars will be that way which comprises the machine learning algorithm (A). If the car is registered, both ways are available, where they can be implemented simultaneously or sequentially, or only one of the two ways may be selected.

Finally, the method (100) also comprises the help of an augmented reality (AR) algorithm, not shown in any of the drawings, when the portable device (3) takes photographs (2) of the objects. In this particular example, help is provided for centering the car in the photograph and capturing the best lighting of the scene. In another particular example, help is provided for moving the camera of the portable device (3) while recording a video from which the most relevant frames will be selected.

### System

The embodiments of a system configured for carrying out the steps of the method (100) are described below.

In one embodiment, "embodiment 1", there is provided a system (1) for assigning quantitative characteristics (7) to an object based on at least one photograph (2) that a portable device (3) takes of the object, said portable device (3) being configured for taking photographs (2) and storing them in an internal memory (4), wherein the system (1) comprises:
an identification module (10) configured for receiving the at least one photograph (2) that the portable device (3) takes, identifying a typology (8) of the photographed object, and providing said identified typology (8) together with a level of accuracy (5),
an assessment module (20) configured for linking a typology (8) of an object with its assessment (6), and
a characterization module (30) which assigns quantitative characteristics (7) to an object depending on its assessment (6),
said modules being configured for carrying out the corresponding steps of the method (100) of each module.

"Embodiment 2": The system (1) according to "embodiment 1" for assigning quantitative characteristics (7) to an object, wherein the system (1) further comprises:
a cleaning module (40) configured for interacting with photographs (2) stored in the internal memory (4) of the portable device (3) and for processing (310) said photographs (2), and
the cleaning module (40) is additionally configured so as to recognize (320) and segment at least one distinctive element (9) of the object from a photograph (2) of said object;
wherein the cleaning module (40) is configured for carrying out the steps of the method (100) corresponding to said cleaning module (40).

"Embodiment 3": The system (1) according to "embodiment 2" for assigning quantitative characteristics (7) to an object, wherein the system (1) further comprises:
a temporary storage server (70), with a database (71), configured for anonymizing (220) and storing (230) in the database (71) in a temporary manner the at least one photograph (2) that the portable device (3) takes and the identification module (10) will receive, and
the temporary storage server (70) is additionally configured for identifying patterns in the at least one photograph (2) it receives, and
the temporary storage server (70) is additionally configured for anonymizing (220) and storing (230) in a separate manner the at least one photograph (2) of the object it receives and its segmented distinctive element (9), if any, and
wherein the temporary storage server (70) is configured for carrying out the steps of the method (100) corresponding to said temporary storage server (70).

"Embodiment 4": The system (1) according to "embodiment 3" for assigning quantitative characteristics (7) to an object, wherein the system (1) further comprises:
a training sub-module (11) of the machine learning algorithm (A) configured for storing at least one set of training photographs (15), such that each set of training photographs (15) shows an object that can be identified by the identification module (10), and said training sub-module (11) being additionally configured for training (400) the machine learning algorithm (A) by assigning at least one typology (8) to each photograph of the at least one set of training photographs (15); and
the training sub-module (11) is additionally configured for identifying a plurality of options (8.1, 8.2) for one and the same typology (8) and for sending the plurality of options (8.1, 8.2) to the portable device (3);
wherein the training sub-module (11) is configured for carrying out the steps of the method (100) corresponding to said training sub-module (11) .

"Embodiment 5": The system (1) according to "embodiment 4" for assigning quantitative characteristics (7) to an object, wherein the system further comprises:
a feedback sub-module (12) of the machine learning algorithm (A) configured for storing those photographs (2) which have been assigned the "valid" state, with the level of accuracy (5) thereof furthermore preferably being complete, and for feeding them back (450) to the machine learning algorithm (A);
wherein the feedback sub-module (12) is configured for carrying out the steps of the method (100) corresponding to said feedback sub-module (12).

"Embodiment 6": The system (1) according to "embodiment 5" for assigning quantitative characteristics (7) to an object, wherein the system (1) further comprises:
a correspondence module (60) configured for identifying (340) the typology (8) of the object based on the distinctive element (9),
the correspondence module (60) being configured for carrying out the steps of the method (100) corresponding to said module.

"Embodiment 7": The system (1) according to "embodiment 6" for assigning quantitative characteristics (7) to an object, wherein the system (1) further comprises:
a text recognition module (50) characterized in that it converts (600) a distinctive element (9) of an object to text format,
the text recognition module (50) being configured for carrying out the steps of the method (100) corresponding to said module.

## Claims

1. A computer-implemented method (100) for a system (1) to assign quantitative characteristics (7) to an object based on at least one photograph (2) that a portable device (3) takes of the object, said portable device (3) being configured for taking photographs (2) and storing them in an internal memory (4), wherein the system (1) comprises:
an identification module (10) configured for receiving the at least one photograph (2) that the portable device (3) takes, identifying a typology (8) of the photographed object, and providing said identified typology (8) together with a level of accuracy (5),
an assessment module (20) configured for linking a typology (8) of an object with its assessment (6), and
a characterization module (30) which assigns quantitative characteristics (7) to an object depending on its assessment (6),
wherein the method (100) comprises the steps of:
a) the identification module (10) receiving (110) at least one photograph (2) of an object stored in an internal memory (4) of a portable device (3),
b) the identification module (10) identifying (120) at least one typology (8) of the photographed object furthermore providing its level of accuracy (5), such that:
in the event that said level of accuracy (5) is lower than a given threshold (U), the at least one photograph is rejected, and
in the event that said level of accuracy (5) is greater than the given threshold (U), the at least one photograph (2) is assigned the "valid" state and the following step is carried out,
c) the assessment module (20) receiving (130) the at least one typology (8) of the photographed object from the identification module (10),
d) the assessment module (20) linking (140) the at least one typology (8) of the object with its assessment (6),
e) the characterization module (30) receiving (150) said assessment (6) linked with the at least one typology (8) by the assessment module (20) and the characterization module (30) assigning (145) quantitative characteristics (7) to the object depending on said assessment (6), and
f) sending (160) said assessment (6) and quantitative characteristics (7) of the object to the portable device (3) .

2. The method (100) according to claim 1, wherein the system (1) additionally comprises
a cleaning module (40) configured for interacting with photographs (2) stored in the internal memory (4) of the portable device (3) and for processing (310) said photographs (2),
wherein the method (100) additionally comprises a prior step of the cleaning module (40) processing (310) the at least one photograph (2) of an object that the portable device (3) takes, the step of processing (310) comprising:
the cleaning of at least one unwanted element, or
the enhancement of edges, or
lighting correction, or
a combination of two or more of the above.

3. The method (100) according to any of the preceding claims, wherein the system (1) further comprises
a temporary storage server (70), with a database (71), configured for anonymizing (220) and storing (230) in the database (71) in a temporary manner the at least one photograph (2) that the portable device (3) takes and the identification module (10) will receive,
wherein the method (100) additionally comprises the following steps performed by the temporary storage server (70) :
- receiving (210) at least one photograph (2) of an object stored in an internal memory (4) of the portable device (3),
- anonymizing (220) the at least one photograph (2) of an object,
- storing (230) in the database (71) the at least one anonymized photograph (2) of an object,
- sending (240) the at least one anonymized photograph (2) to the identification module (10).

4. The method (100) according to claim 3, wherein the method (100) additionally comprises a step of the temporary storage server (70) selecting (221) the photograph or photographs (2) complying with a pre-established quality requirement, preferably photographs (2) taken under conditions with good lighting, up to a pre-established maximum number (N) of photographs (2), and
wherein the steps of anonymizing (220), storing (230), and sending (240) according to claim 3 are carried out on the photographs selected by the temporary storage server (70).

5. The method (100) according to any of the preceding claims, wherein the step of identifying (120) at least one typology (8) of the photographed object is performed by means of a machine learning algorithm (A), preferably convolutional neural networks.

6. The method (100) according to claim 5, wherein the identification module (10) additionally comprises:
a training sub-module (11) of the machine learning algorithm (A) configured for storing at least one set of training photographs (15), such that each set of training photographs (15) shows an object that can be identified by the identification module (10), and said training sub-module (11) being additionally configured for training (400) the machine learning algorithm (A) by assigning at least one typology (8) to each photograph of the at least one set of training photographs (15);
wherein the method (100) additionally comprises the following steps performed by the training sub-module (11) of the machine learning algorithm (A):
- storing at least one set of training photographs (15),
- training (400) the machine learning algorithm (A) by assigning at least one typology (8) to each of the photographs of the at least one set of training photographs (15).

7. The method (100) according to the preceding claim, wherein the training sub-module (11) of the machine learning algorithm (A) is additionally configured for identifying a plurality of options (8.1, 8.2) for one and the same typology (8) and for sending the plurality of options (8.1, 8.2) to the portable device (3);
wherein the step of training (400) the machine learning algorithm (A) of the method (100) additionally comprises the following steps:
- the training sub-module (11) identifying (410) a plurality of options (8.1, 8.2) for at least one typology (8) of the object of a photograph (2) received by the identification module (10),
- the portable device (3) receiving (420) the plurality of options (8.1, 8.2) for its selection,
- the training sub-module (11) receiving (430) the selected option of typology (8),
- the training sub-module (11) storing (440) the photograph as part of the set of training photographs (15),
- the training sub-module (11) training (400) the machine learning algorithm (A) by assigning to the new training photograph (15) the option (8.1, 8.2) of the at least one selected typology (8).

8. The method (100) according to the preceding claim, wherein the photograph (2) in which the training sub-module (11) identifies a plurality of options (8.1, 8.2) is a photograph (2) to be rejected in step (b) of the method (100) and,
wherein the method (100) additionally comprises:
- the identification module (10) receiving the option or options (8.1, 8.2) of typologies (8) selected by the portable device (3),
- the identification module (10) providing a level of complete accuracy for the photograph (2) to be rejected and assigning to said photograph the "valid" state;
- continuing with step (c) of the method.

9. The method (100) according to any of claims 5 to 8, wherein the identification module (10) in turn comprises:
a feedback sub-module (12) of the machine learning algorithm (A) configured for storing those photographs (2) which have been assigned the "valid" state, with the level of accuracy (5) thereof furthermore preferably being complete, and for feeding back (450) the machine learning algorithm (A);
wherein the method (100) additionally comprises the following steps performed by the feedback sub-module (12) of the machine learning algorithm (A):
- storing the photograph or photographs (2) which have been assigned the "valid" state, with the level of accuracy (5) thereof furthermore preferably being complete, and
- feeding back (450) the machine learning algorithm (A) of the identification module (10) with said photograph or photographs (2) to help obtain, in subsequent implementations of the method (100), a higher level of accuracy (5) when identifying the at least one typology (8) of the same photographed object or of another photographed object with the same typology/typologies.

10. The method (100) according to any of claims 5 to 9, wherein the temporary storage server (70) is furthermore configured for identifying patterns in the at least one photograph (2) it receives, and wherein the method (100) further comprises the steps of:
- the temporary storage server (70) identifying patterns in the at least one photograph (2) it receives, preferably alphanumeric characters, and
- the identification module receiving (10) said patterns, such that the machine learning algorithm (A) of the identification module (10) uses them as additional information in the identification (120) of the at least one typology (8) of the photographed object.

11. The method according to claim 10, wherein pattern identification by the temporary storage server (70) is performed by means of computer vision techniques, preferably by means of a variant of the SURF (Speeded-Up Robust Features) algorithm.

12. The method (100) according to any of claims 3 to 11, wherein the cleaning module (40) is additionally configured for interacting with photographs (2) stored in the internal memory (4) of the portable device (3) so as to recognize (320) at least one distinctive element (9) of the object from a photograph (2) of said object;
wherein the system (1) further comprises
a correspondence module (60) configured for identifying (340) the typology (8) of the object based on the distinctive element (9),
and wherein the method (100) further comprises:
- the cleaning module (40) receiving at least one photograph (2) of an object stored in an internal memory (4) of the portable device (3),
- the cleaning module (40) recognizing (320) at least one distinctive element (9) of the object from the at least one photograph (2) of said object,
- the correspondence module (60) receiving (330) said at least one distinctive element (9),
- the correspondence module (60) identifying (340) the at least one typology (8) of the object based on the distinctive element (9), and
- the correspondence module (60) sending (350) said at least one typology (8) of the identified object to the assessment module (20).

13. The method (100) according to claim 12, wherein the cleaning module (40) is furthermore configured for segmenting the distinctive element (9) of the object, and wherein the temporary storage server (70) anonymizes (220) and stores (230) in a separate manner the at least one photograph (2) of the object and its segmented distinctive element (9), if any.

14. The method (100) according to any of claims 12 to 13, wherein the system (1) additionally comprises a text recognition module (50) **characterized in that** it converts (600) the distinctive element (9) to text format,
wherein the step of the method (100) of the correspondence module (60) receiving (330) the distinctive element (9) is preceded by the following additional steps:
- the text recognition module (50) receiving the distinctive element (9) of the object,
- the text recognition module (50) converting (600) the distinctive element (9) to text format.

15. The method (100) according to any of the preceding claims, wherein taking at least one photograph (2) of an object by the portable device (3) comprises an augmented reality (AR) algorithm assisting said portable device (3), said augmented reality (AR) algorithm comprising at least one of the following types of help:
help for centering the object to be photographed, or
help for capturing the best lighting, or
help for moving the camera of the portable device (3), or
help for clearly capturing the distinctive element (9) of the object, or
a combination of at least two of the above.

16. A system (1) for assigning quantitative characteristics (7) to an object comprising means for carrying out the steps of the method (100) according to any of claims 1 to 15.

17. A computer program comprising instructions which, when the program is run by a computer, causes the computer to carry out the steps of the method according to any of claims 1 to 15.

18. A computer-readable medium comprising instructions which, when run by a computer, causes the computer to carry out the steps of the method according to claims 1 to 15.
